# EUROPEAN PATENT SPECIFICATION

(11) **EP 3 315 814 B1**
(45) Date of publication and mention of the grant of the patent: **19.06.2019**
(21) Application number: 17197833.1
(22) Date of filing: 23.10.2017
(51) Int. Cl.: F16F 15/12, F16F 15/131

(54) **MANUFACTURING METHOD OF A FLYWHEEL**
HERSTELLUNGSVERFAHREN EINES SCHWUNGRADS
PROCÉDÉ DE FABRICATION D'UN VOLANT

(30) Priority: 25.10.2016 IT 201600107642
(43) Date of publication of application: 02.05.2018
(73) Proprietor: Bora S.r.l., 60030 Maiolati Spontini (AN) (IT)
(72) Inventor: BORA, ELIO, 60030 MAIOLATI SPONTINI (AN) (IT)
(74) Representative: Cutropia, Gianluigi

(56) References cited:
- EP-A2- 0 763 673
- GB-A- 2 266 125

## Description

The present patent application for industrial invention relates to a manufacturing method of a flywheel, in particular a flywheel for vehicles.

The flywheel is generally shaped like a disk, which is suitably shaped in order to increase the moment of inertia of the shaft whereon it is applied.

This type of flywheels of the prior art is generally obtained from a solid disk using machine tools, such as CNC milling machines, to remove metal chips. However, such a solution is impaired by a very high cost and by the very long time that is needed to produce the finished part, due to the large amount of labor work and raw material waste.

EP0763673 discloses a two-mass type of flywheel device disposed between a shaft of a vehicle and a power transmission device in such a way to dampen the rotational vibrations of the motor.

GB2266125 discloses a torque transfer device, such as, for example, a clutch, comprising a pressure plate, a counterpressure plate and clutch disk disposed between said pressure plate and counterpressure plate in such a way to be axially tensioned by the action of an energy accumulator.

The purpose of the present invention is to eliminate the drawbacks of the prior art, by devising a manufacturing method of a flywheel that is rapid, simple, inexpensive, versatile and at the same time effective and reliable.

These purposes are achieved by the present invention with the characteristics of the independent claim 1.

Advantageous embodiments will appear from the dependent claims.

The manufacturing method of a flywheel according to the present invention comprises the following steps:
- cutting a disk from a sheet metal,
- drawing a central projecting part of the disk by means of at least one punch with a spherical head, in such a way to obtain a central projecting part of the disk with a spherical head,
- flattening the spherical head of the central projecting part of the disk, in such manner to obtain a flat head,
- drilling the flat head of the central projecting part of the disk, in such a way to obtain a through hole,
- bending the edges of the flat head around the through hole and extruding a cylindrical shank, in such manner to obtain a hole with constant diameter and bend the peripheral edges of the disk, thus obtaining a bent peripheral edge, and
- cutting slots in a flat portion of the disk between the central projecting portion and the bent peripheral edge.

The advantages of the method according to the present invention are evident, because it allows for obtaining a flywheel by means of cutting and drawing operations that are made with molds, without having to use milling machines and turning machines to remove metal chips.

Additional features of the invention will appear manifest from the detailed description below, which refers to merely a illustrative, not limiting embodiment, as illustrated in the attached figures, wherein:
Figs. 1 to 11 are plan views of the parts coming out of each working station of a transfer press used to obtain a flywheel according to the method of the invention;
Figs. 1A to 11A are axial views of the parts of Figs. 1 to 11, respectively;
Figs. 1B to 11B are partially interrupted axial views of the tools of each working station of the transfer press used to obtain a flywheel according to the method of the invention; and
Fig. 12 is a diagrammatic view of the transfer press used to obtain a flywheel according to the method of the invention.

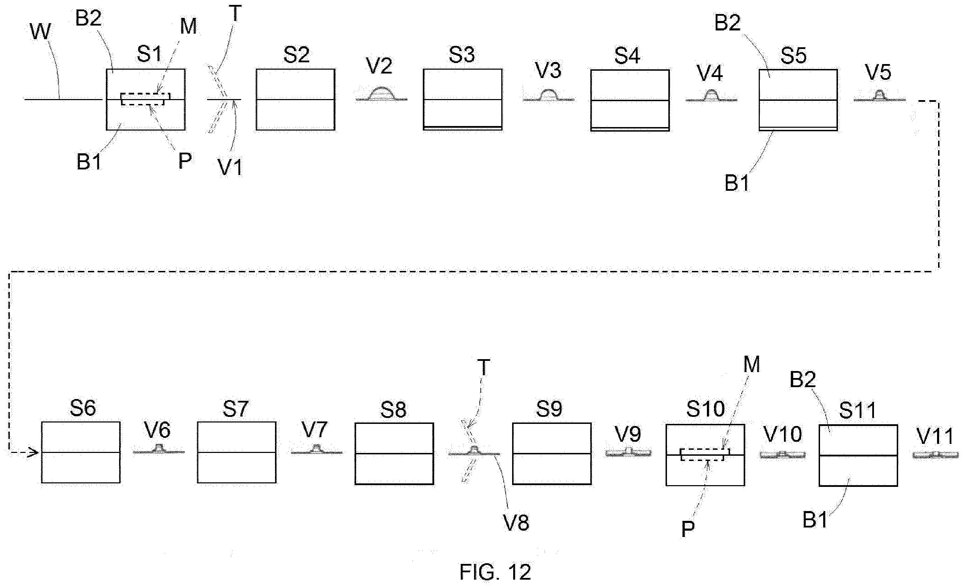

With reference to Fig. 12, the flywheel is obtained with a transfer press comprising a plurality of stations (S1-S11) progressively disposed in line. Each station (S1-S11) comprises a cutting and/or drawing mold provided with a lower base (B1) and an upper base (B2). Cutting or drawing tools, such as punches and dies, are mounted in the lower base (B1) and in the upper base (B2) of each mold according to the specific requirements. For example, a punch (P) is mounted in the lower base (B1) and a die (M) is mounted in the upper base (B2).

The lower base (B1) remains fixed, whereas the upper base (B2) moves with respect to the lower base, in such a way to open and close the mold. The upper bases (B2) of each mold are connected to a ram of the press that moves with alternate motion, in such a way to open and close all molds simultaneously. The worked parts (V1-V11) coming out of the stations (S1-S10) are transferred to the following station by means of transfer means of known type (T), such as for example handling devices, conveyors and the like, which are not illustrated in detail herein. The finished part (V11) consisting in a flywheel comes out from the last station (S11).

The transfer means (T) impart each part a speed that is synchronized with the opening and closing speed of the molds. In this way, the transfer means (T) are moved by indexed motion according to the following steps:
- they place the parts in the molds when the molds are open,
- they stop when the molds close,
- they take the parts from the molds when the molds open.

The method starts with a sheet metal band (W), preferably of DD14 steel, with 130 mm width and 3.5 mm thickness. The sheet metal band (W1) is fed to a first station (S1).

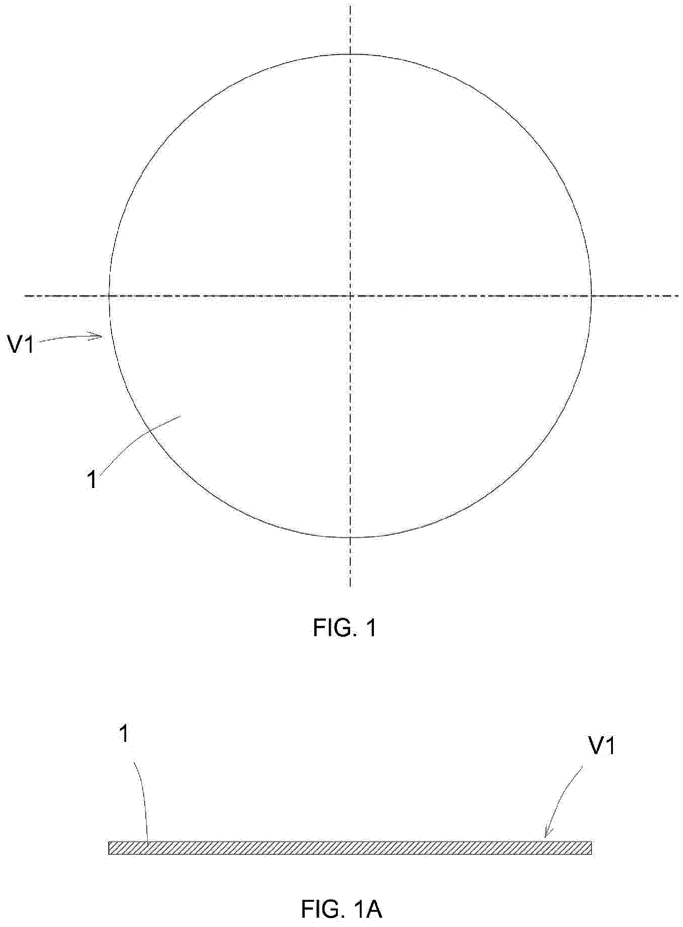

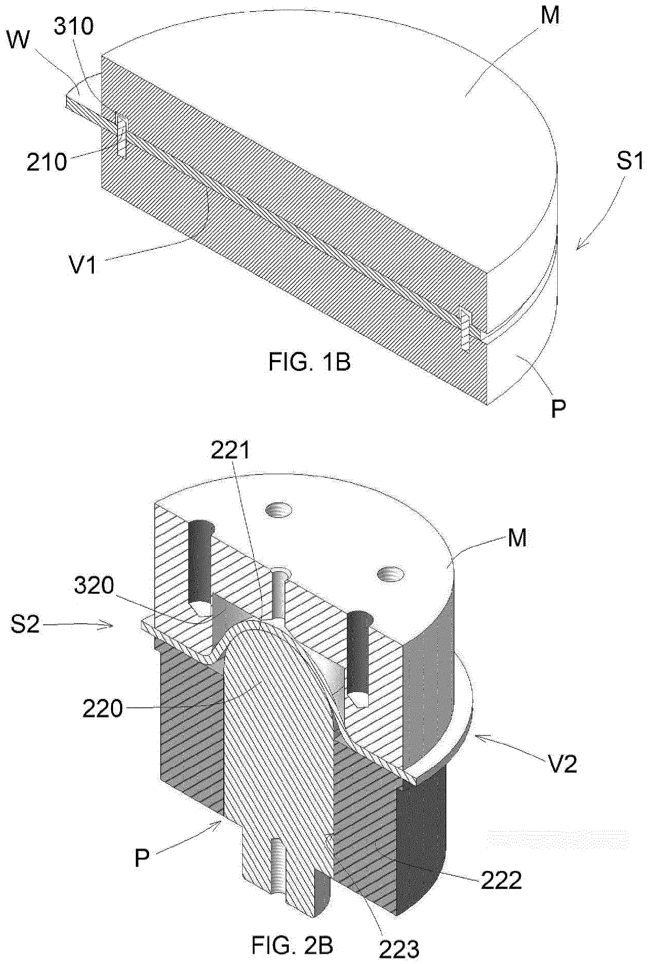

With reference to Fig. 1B, the mold of the first station (S1) is a cutting mold comprising a punch (P) mounted in the lower base (B1) and a die (M) mounted in the upper base (B2). The punch (P) comprises a cylinder (210) with an upper edge. The die (M) comprises a cylindrical housing (310) wherein the cylinder (210) of the punch enters after cutting the sheet metal.

When the mold of the first station (S1) is closed, a first part (V1) consisting in a disk (1) (Figs. 1 and 1A) with 125 mm diameter is cut from the sheet metal band (W). This diameter size of the disk (1) allows for obtaining a desired external profile of the flywheel, after making all the following operations in the following stations.

The transfer means (T) transfer the disk (1) from the first station (S1) to a second station (S2). The second station (S2) is a drawing station.

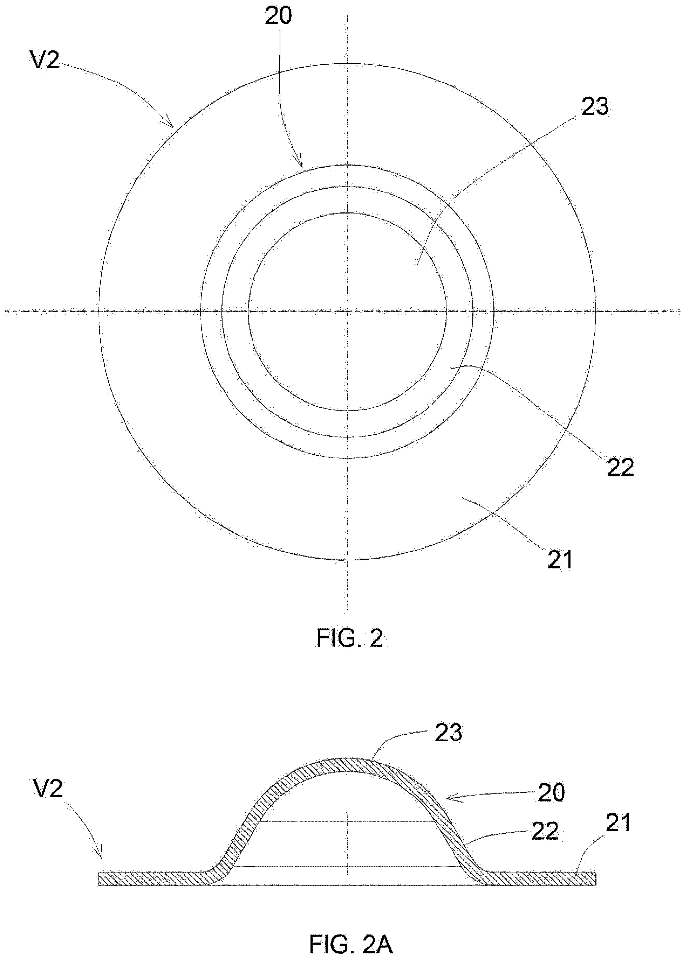

With reference to Fig. 2B, the mold of the second station (S2) comprises a punch (P) comprising a cylindrical body (220) and a head (221) shaped as a segment of a sphere. The cylindrical body (220) is mounted in a hole (23) of a plate (22) in such a way that the head (221) projects from the plate (222). The die (M) comprises a cylindrical housing (320) directed towards the head (221) of the punch.

In the second station (S2), the disk (1) is blocked between a holding-down clamp (fixed on four nitrogen cylinders) and the die that is joined to the upper base. When the disk (1) is fixed in position, the upper base (B1) continues the descending step to deform the disk, by means of the head (221) of the punch, in such a way to obtain a suitably shaped second part (V2).

With reference to Figs. 2 and 2A, the second part (V2) comprises a central projecting portion (20) that projects from the flat base portion (21). The central projecting portion (20) comprises a truncated-conical shank (22) with a head (23) shaped as a segment of a sphere. The shank (22) is joined to the flat base (21) and to the head (23) by means of curved connection surfaces.

The second part (V2) is transferred to the third station (S3), which is a drawing station similar to the second station.

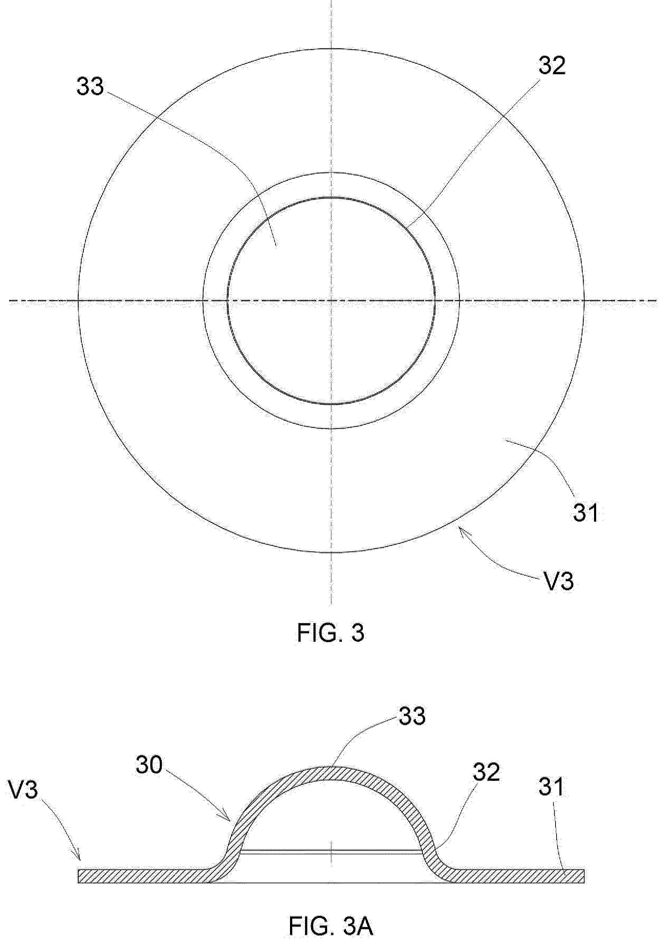

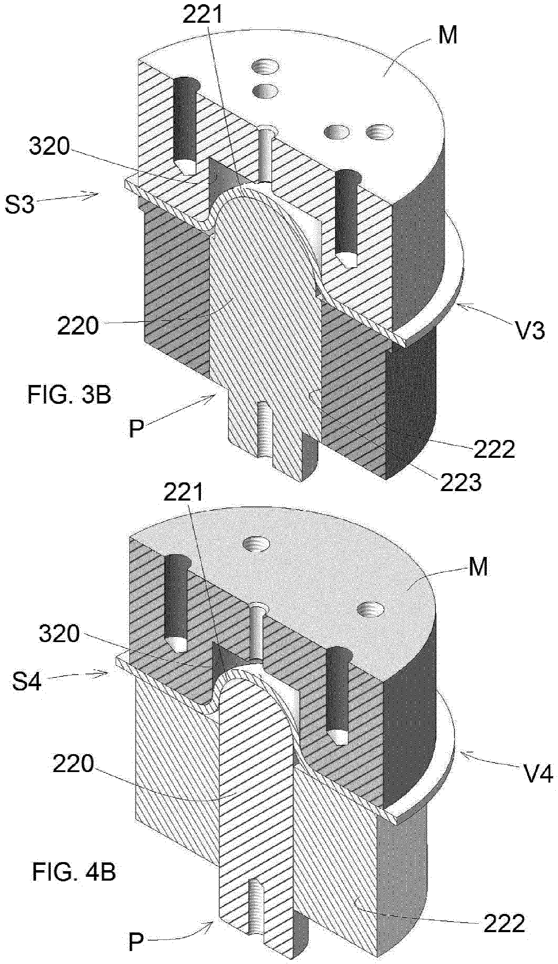

With reference to Fig. 3B, the mold of the third station (S3) comprises a punch (P) with a head (221) having a lower diameter than the head of the punch of the second station (S2). A suitably shaped third part (V3) is obtained from the third station (S3).

With reference to Figs. 3 and 3A, the third part (V3) comprises a central projecting portion (30) that projects from a flat base portion (31). The central projecting portion (30) comprises a truncated-conical shank (32) with a head (33) shaped as a segment of a sphere. The shank (32) is joined to the flat base (31) and to the head (33) by means of curved connection surfaces. The shank (32) of the third part (P3) has a lower diameter than the shank of the second part (P2).

The third part (P3) is transferred to a fourth station (S4), which is a drawing station similar to the third station.

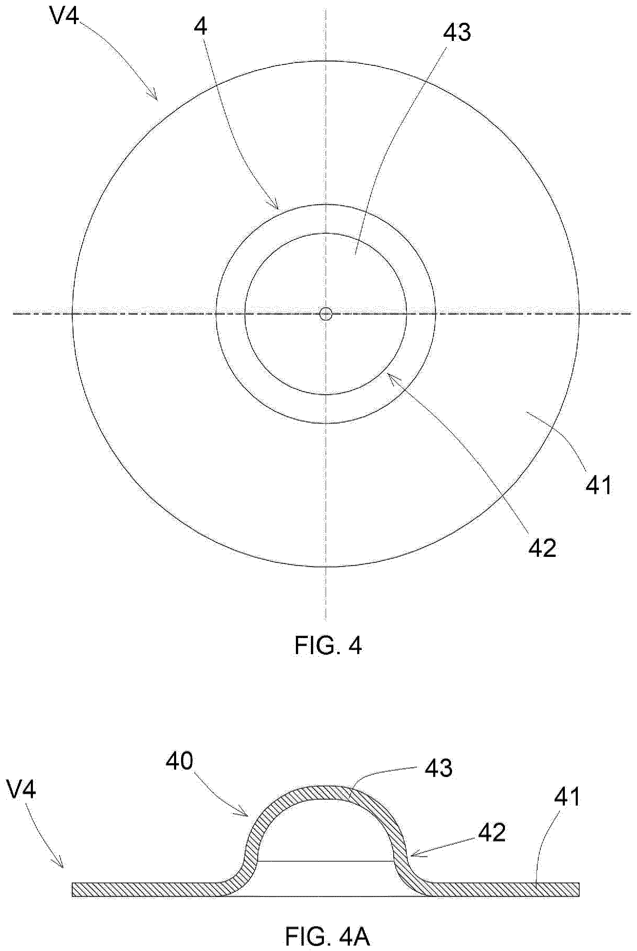

With reference to Fig. 4B, the mold of the fourth station (S4) comprises a punch (P) with a body (220) and a head (221) with lower diameters than the body and the head of the punch of the third station (S3). In this case, a portion of the cylindrical body (220) projects in upper position from the upper surface of the plate (222), in such a way to additionally draw the central projecting portion of the disk. A suitably shaped fourth part (V4) is obtained from the fourth station (S4).

With reference to Figs. 4 and 4A, the fourth part (V4) comprises a central projecting portion (40) that projects from a flat base portion (41). The central projecting portion (40) comprises a shank (42) shaped as an involute in axial section and a head (43) shaped as a segment of a sphere. The shank (42) is joined to the flat base (41) and to the head (43). The shank (42) of the fourth part (P4) has a lower diameter than the shank of the third part (P3).

The fourth part (P4) is transferred to a fifth station (S5), which is a drawing station similar to the fourth station.

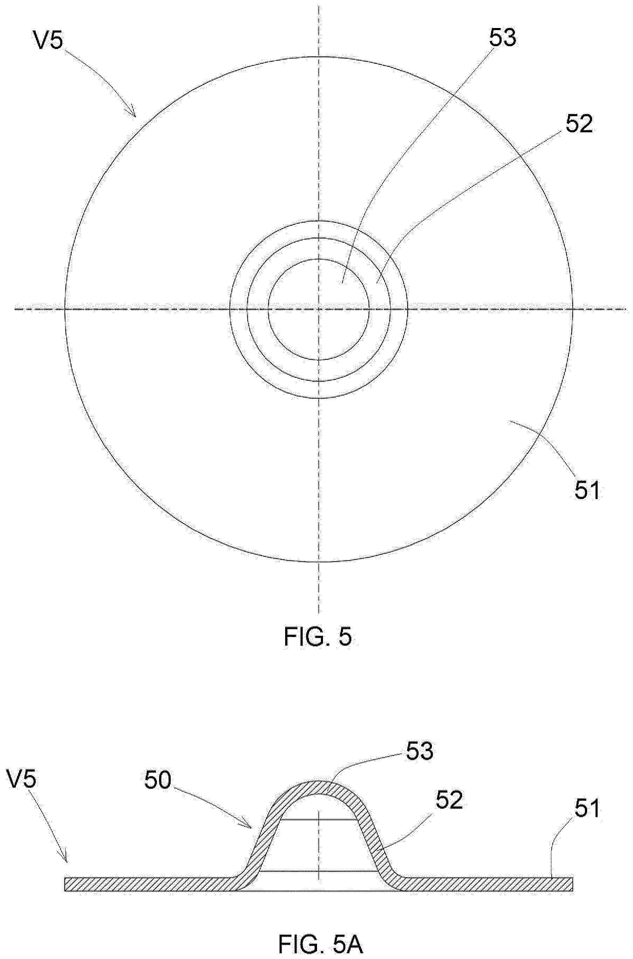

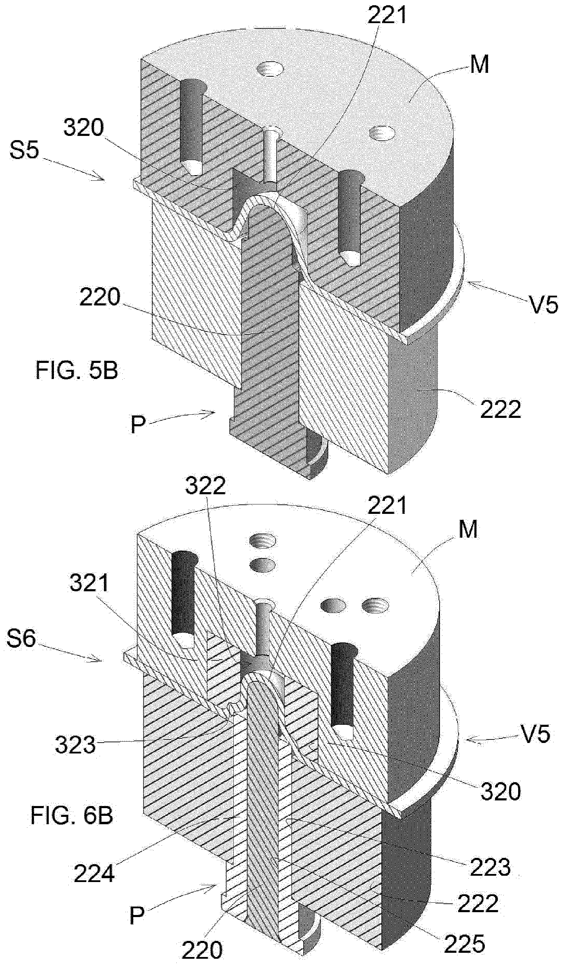

With reference to Fig. 5B, the mold of the fifth station (S5) comprises a punch (P) with a body (220) and a head (221) with lower diameters than the body and the head of the punch of the fourth station (S4). In this case, a portion of the cylindrical body (220) projects in upper position from the upper surface of the plate (222) of the punch, in such a way to additionally draw the central projecting portion of the disk. A suitably shaped fifth part (V5) is obtained from the fifth station (S5).

With reference to Figs. 5 and 5A, the fifth part (V5) comprises a central projecting portion (50) that projects from a flat base portion (51). The central projecting portion (50) comprises a truncated-conical shank (52) and a head (53) shaped as a segment of a sphere. The shank (52) is joined to the flat base (51) and to the head (53) by means of curved portions. The shank (52) of the fifth part (P5) has a lower diameter than the shank of the fourth part (P4).

The fifth part (P5) is transferred to a sixth station (S6), which is a drawing station, where the lateral surface of the central projecting part of the disk starts to be shaped.

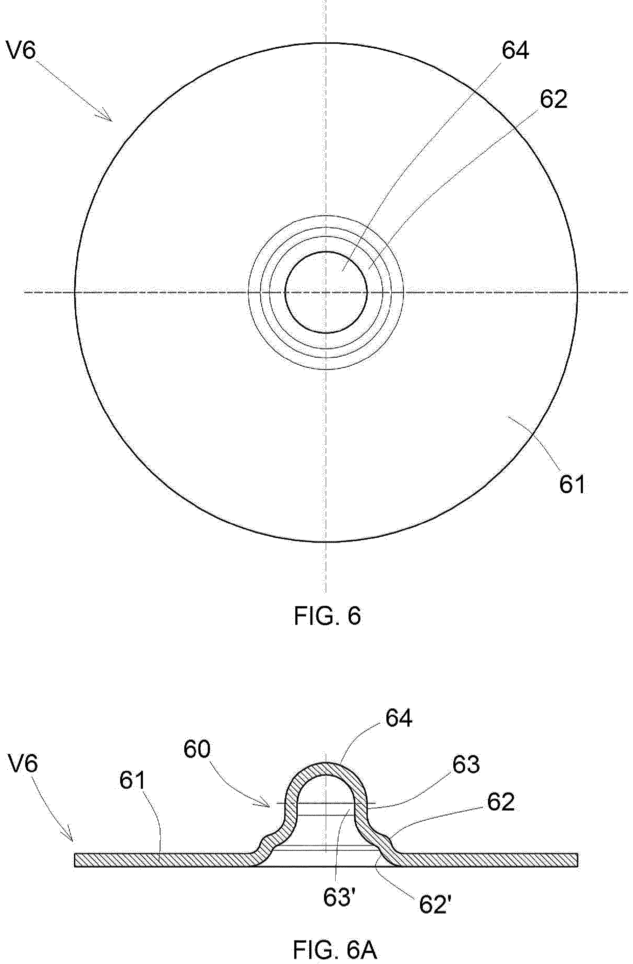

With reference to Fig. 6B, the mold of the sixth station (S6) comprises a punch (P) with a body (220) and a head (221) having lower diameters than the body and the head of the punch of the fifth station (S5). In this case, a sleeve (224) is inserted in the hole (223) of the plate (222) of the punch. The sleeve (224) of the punch has an axial hole (225) wherein the body (220) of the punch is inserted in such a way that the head (221) of the body of the punch projects from the sleeve.

A cylindrical insert (**321)** with an axial hole (322) is inserted in the housing (320) of the die (M). The cylindrical insert (321) has a lower edge with an annular groove (**323**) in communication with the axial hole (322) in such a way to enlarge the base of the central projecting portion of the disk.

When the punch (P) is coupled with the die (M), the head (221) of the punch enters the axial hole (322) of the insert, pushing the material of the central projecting portion of the disk. A suitably shaped sixth part (V6) is obtained from the sixth station (S6).

With reference to Figs. 6 and 6A, the sixth part (V6) comprises a central projecting portion (60) that projects from a flat base portion (61). The projecting portion (60) comprises:
- a first shank (62) generated by the annular groove (323) of the cylindrical insert of the die, and
- a second shank (63) generated by the spherical head (221) of the body of the punch, which ends in a head (64) shaped as a segment of a sphere.

The first shank (62) is shaped as an involute in axial section. The second shank (63) projects axially from the first shank and has a cylindrical shape and a lower diameter than the first shank. The first shank (62) defines a housing (62') and the second shank (63) defines a housing (63') with lower diameter.

The sixth part (P6) is transferred to a seventh station (S7) wherein the head of the central projecting portion of the disk is flattened.

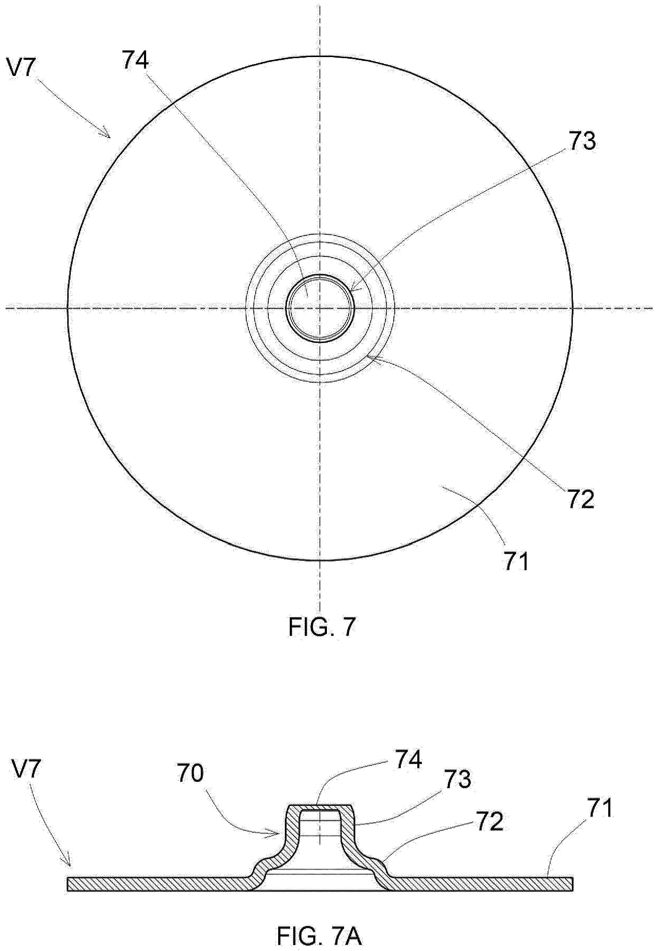

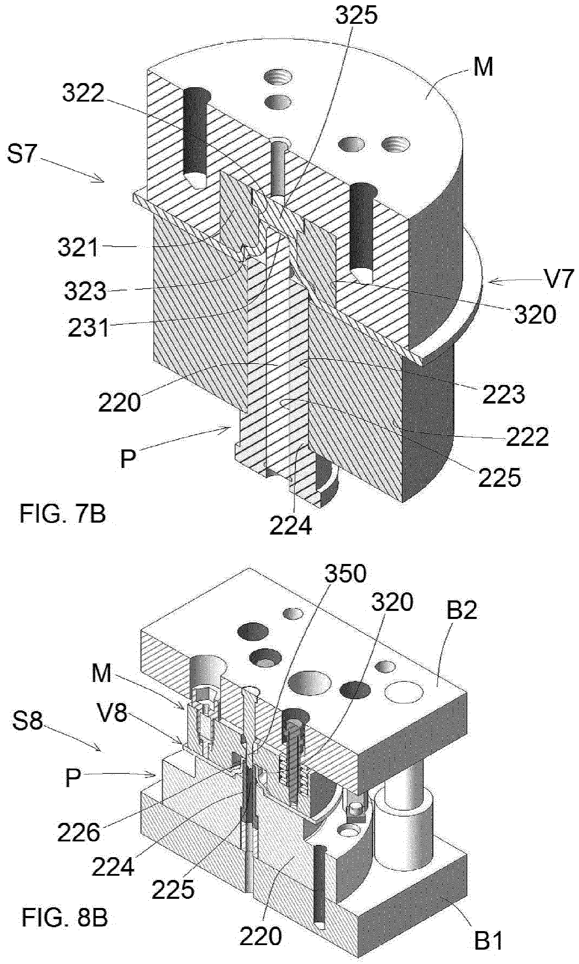

With reference to Fig. 7B, in this case, the body (220) of the punch has a flat planar head (231); a plug (325) with a flat planar lower surface is disposed in the axial hole (322) of the cylindrical insert (321) of the die.

When the punch (P) is coupled with the die, the head of the central projecting portion of the disk is compressed between the flat head (231) of the body of the punch and the flat lower surface of the plug (325) of the insert of the die. A suitably shaped seventh part (V7) is obtained from the seventh station (S7).

With reference to Figs. 7 and 7A, the seventh part (V7) comprises a central projecting portion (70) that projects from a flat base portion (71). The central projecting portion (70) comprises a first shank (72) shaped as an involute in axial section, a second shank (73) that projects axially from the first shank and has a cylindrical shape and a lower diameter than the first shank and a flat head (74) disposed on the second shank (73).

The seventh part (**V7**) is transferred to an eighth station (S8), which is a cutting station, where a hole is drilled in the flat head (74) of the central projecting part of the disk.

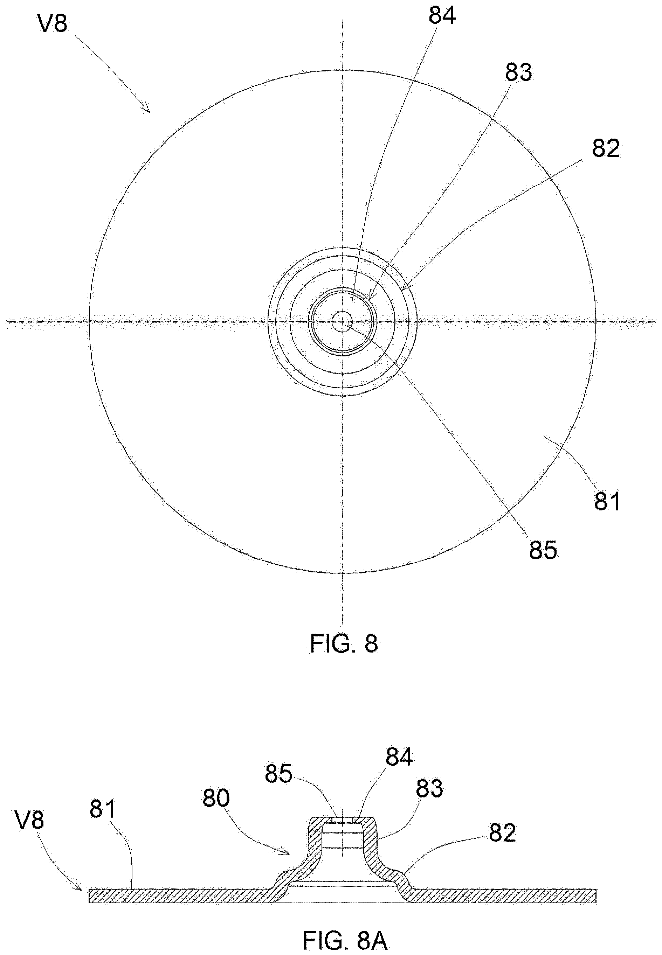

With reference to Fig. 8B, said hole is drilled by means of a sharp blade (350) connected to the upper base (B2) and passing through the die (M) in order to be disposed in the housing (320) of the die. The punch (P) is not provided with body with head and only has the sleeve (224) with the axial hole (225) provided with an upper edge (226) that presses the head of the central projecting portion of the disk. The blade enters the axial hole of the sleeve of the punch, drilling the head of the central projecting part of the disk.

A suitably shaped eighth part (V8) is obtained from the eighth station (S8).

With reference to Figs. 8 and 8A, the eighth part (V8) comprises a central projecting portion (80) that projects from a flat base portion (81). The central projecting portion (80) comprises a first shank (82) shaped as an involute in axial section, a second shank (73) that projects axially from the first shank and has a cylindrical shape and a lower diameter than the first shank, a flat head (84) disposed on the second shank (83) and a through axial hole (85) obtained in the flat head (84). A collar formed by the edge of the flat head (84) is provided around the through axial hole (85).

The eighth part (P8) is transferred to a ninth station (S9).

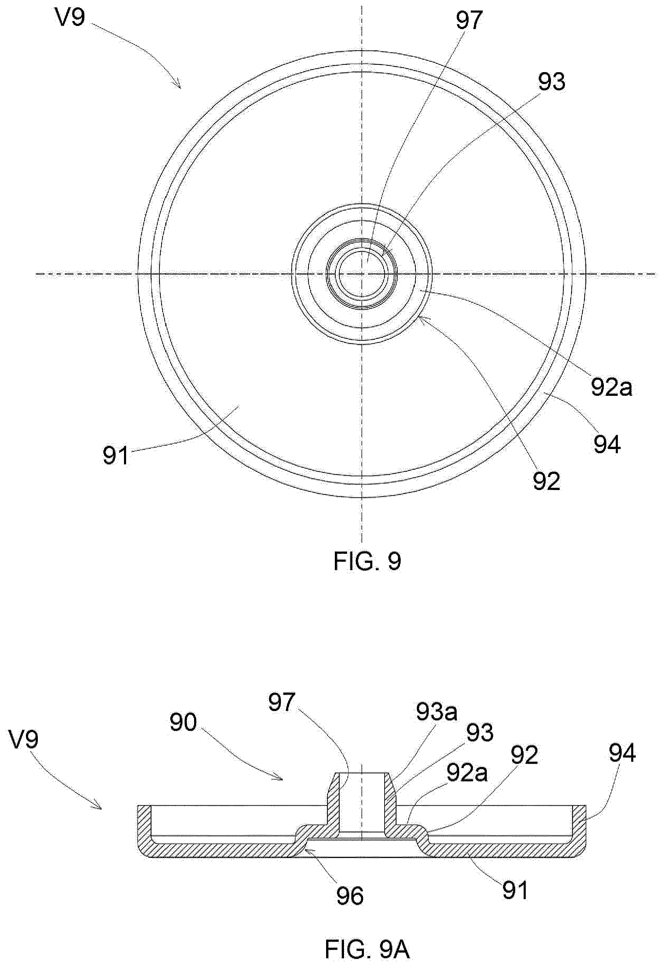

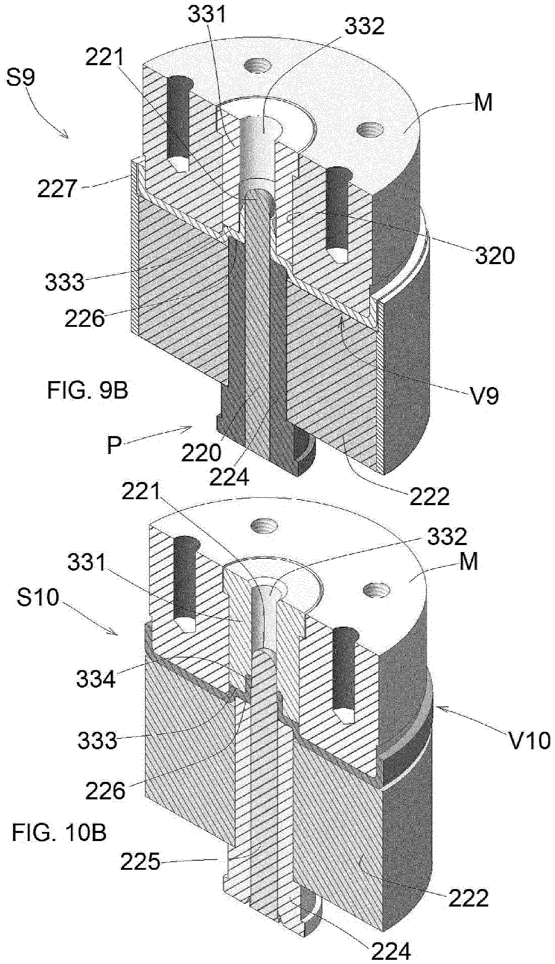

With reference to Fig. 9B, the mold of the ninth station (S9) comprises a die (M) with a cylindrical insert (**331**) inserted in the housing (320) of the die. The cylindrical insert (331) has a lower flat planar ending edge (333).

The punch (P) has a cylindrical body (220) with a head (221) shaped as a segment of a sphere. The diameter of the body (220) of the punch of the ninth station is substantially equal to the diameter of the body of the punch of the seventh station. The body of the punch is disposed in the sleeve (224) of the punch having an upper flat planar upper surface (226) that projects from the upper surface of the plate (222) of the punch.

The plate (222) of the punch of the ninth station (S9) also comprises a peripheral cylindrical portion (227) that projects in upper position from the plate and is used to bend the peripheral edge of the disk.

When the punch is coupled with the die, the head (221) shaped as a segment of a sphere enters the axial hole (332) of the cylindrical insert (331) of the die. Consequently, the second shank of the central projecting portion of the disk is extruded, i.e. the edges of the flat head (84) around the hole (85) are bent in such a way to obtain a hole with constant diameter. Moreover, the connection surface between the first shank and the second shank of the central projecting portion of the disk is compressed and flattened between the lower edge (333) of the cylindrical insert (331) of the die and the upper edge (266) of the sleeve (224) of the punch. Simultaneously, the peripheral cylindrical portion (227) of the plate (222) of the punch bends the peripheral edge of the disk.

A suitably shaped ninth part (V9) is obtained by means of the punch and the die of the ninth station (S9).

With reference to Figs. 9 and 9A, the ninth part (V9) comprises a central projecting part (90) that projects from a flat base portion (91). The central projecting portion (90) comprises a first cylindrical shank (92), a second cylindrical shank (93) that projects axially from the first shank and has a lower diameter than the first shank, a housing (96) defined by the first shank and an axial hole with constant diameter (97) defined by the second shank (93). It must be noted that the second shank has an upper portion (93a) with decreasing thickness.

The ninth part (**V9**) is transferred to a tenth station (S10).

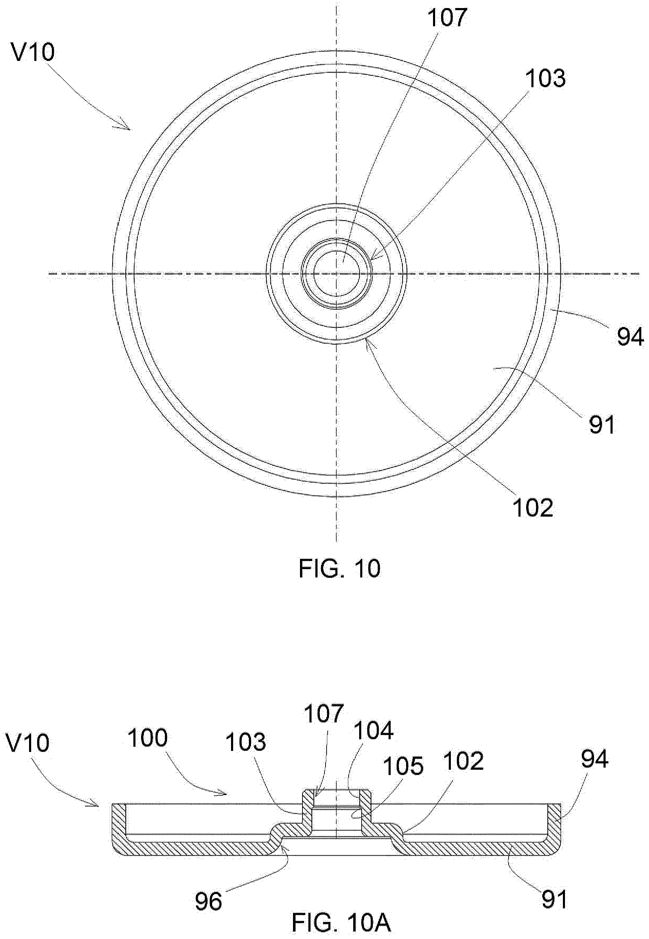

With reference to Fig. 10B, the mold of the tenth station (S10) comprises a cylindrical insert (331) of the die provided with a cylindrical groove (334) that starts from the lower edge (333) of the cylindrical insert and ends in the axial channel (332) of the cylindrical insert. Such a cylindrical groove (334) of the insert of the die is used to contain, straighten and uniform the thickness of the second shank of the central projecting part of the disk.

A suitably shaped tenth part (V10) is obtained by means of the punch and the die of the tenth station (S10).

With reference to Figs. 10 and 10A, the tenth part (V10) comprises a central projecting part (100) that projects from the flat base portion (91) with the bent peripheral edge (94). The central projecting portion (100) comprises a first cylindrical shank (102), a second cylindrical shank (103) that projects axially from the first shank and has a lower diameter than the first shank, a housing (96) defined by the first shank and an axial hole (**107**) defined by the second shank (103). It must be noted that the axial hole (107) does not have a constant diameter, in fact the second shank (103) has an upper portion (104) with higher thickness that defines a radial surface (105).

The tenth part (**V10**) is transferred to an eleventh station (S11) wherein slots are cut in the disk of the flywheel.

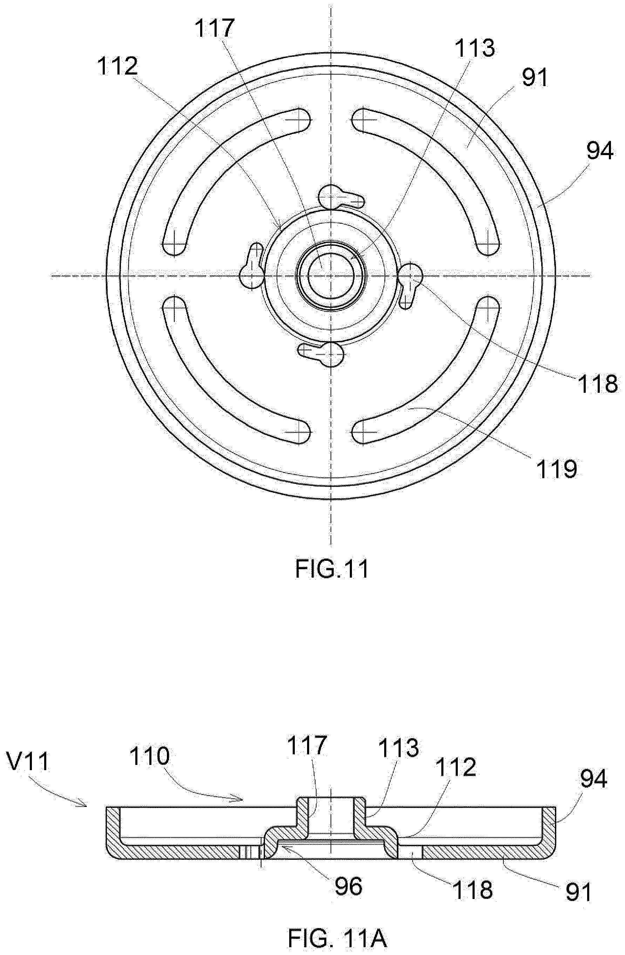

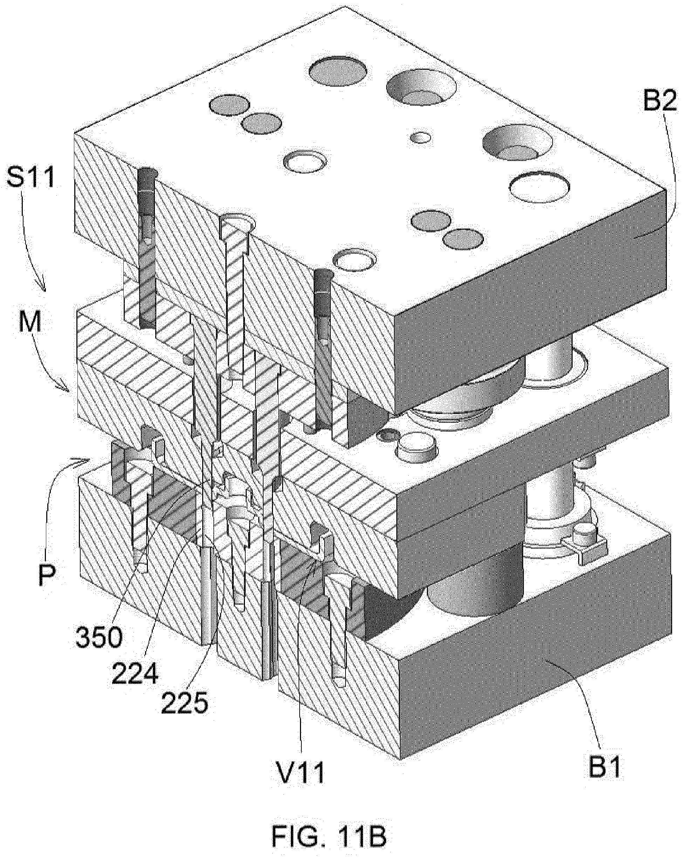

With reference to Fig. 11B, said slots are made by means of sharp blades (350) that are connected to the upper base (B2) and cross the die (M) to enter sleeves (224) with the axial hole (225). The blades (350) enter the axial hole of the sleeve of the punch, drilling the disk of the flywheel.

A suitably shaped eleventh part (V11), which is the finished flywheel, is obtained by means of the punch and the die of the eleventh station (S11).

With reference to Figs. 11 and 11A, the eleventh part (V11) comprises a central projecting part (110) that projects from the flat base portion (91) with the bent peripheral edge (94). The central projecting portion (110) comprises a first cylindrical shank (112), a second cylindrical shank (**113**) that projects axially from the first shank and has a lower diameter than the first shank, a housing (96) defined by the first shank and an axial hole (**117**) with constant diameter defined by the second shank (**113**). A plurality of slots (118, 119) is obtained in the flat base (91) between the central projecting portion (110) and the bent peripheral edge (94).

Although in this description specific reference is made to transfer press with eleven stations (S1-S11), the method of the invention is also extended to other types of press, which are not transfer presses, or to presses with a lower number of stations, in which it is obviously necessary to replace the tools of the molds while progressing with the work steps.

## Claims

1. Manufacturing method of a flywheel comprising the following steps:
- cutting a disk (1) from a sheet metal (W),
- drawing a central projecting part of the disk by means of at least one punch with a spherical head (221) in such a way to obtain a central projecting part (60) of the disk with a spherical head (64) that projects from a flat part (61) of the disk,
- flattening the spherical head (64) of the central projecting part of the disk, in such a way to obtain a flat head (74),
- drilling the flat head (74) of the central projecting part of the disk, in such a way to obtain a through axial hole (85), with a collar formed by the edge of the flat head (84) around the through axial hole (85);
- bending the edges of the flat head around the through hole (85) and extruding a cylindrical shank (93) in such a way to obtain a hole (97) with constant diameter and bend the peripheral edges of the disk, in such a way to obtain a bent peripheral edge (94), and
- cutting slots (118, 119) in a flat portion (91) of the disk between the central projecting portion and the bent peripheral edge (94),
wherein
said step of bending the edges of the flat head (84) of the disk is performed by means of a punch (P) having a cylindrical body with a head (221) shaped as a spherical cap and a die having a cylindrical insert (331) with an axial channel (332) facing the head of the punch,
wherein the head (221) shaped as a spherical cap enters the axial channel (332) of the cylindrical insert (331) of the die, consequently, the cylindrical shank (93) is extruded, i.e. the edges of the flat head (84) around the hole (85) are bent in such a way to obtain a hole with constant diameter.

2. The method of claim 1, comprising:
- a first drawing operation of a central projecting part (20) of the disk by means of a first punch (P) having a cylindrical body (220) and a head (221) shaped as a spherical cap and a first die (M) with a housing (320) facing the head of the first punch,
- subsequent drawing operations of a central projecting part (30, 40, 50) of the disk by means of punches (P) having a cylindrical body and a head shaped as a spherical cap and dies (M) with housings facing the heads of the punches, wherein the diameters of the heads of the punches are progressively lower starting from the diameter of the head (221) of the first punch.

3. The method of claim 1 or 2, comprising a drawing operation of a central projecting part (60) of the disk by means of a punch (P) having a cylindrical body and a spherical head and a die (M) having a cylindrical insert (321) with an axial channel (322) facing the head of the punch and a lower edge with an annular groove (323) facing the axial channel, in such a way that the central projecting part (60) of the disk has a first shank (62) generated by the annular groove of the insert of the die and a second shank (63) generated by the head of the punch, wherein the second shank (63) protrudes axially from the first shank and has a lower diameter than the first shank and a head (64) shaped as a spherical cap.

4. The method of any one of the preceding claims, wherein said step for flattening the head (64) of the central projecting part (60) of the disk is performed by means of a punch (P) having a cylindrical body (220) with a flat head (231) and a die (M) having a cylindrical insert (321) with an axial channel (322) facing the head of the punch and a cover (325) with lower flat surface disposed in the axial channel of the cylindrical insert of the die in such a way that the head of the central projecting portion of the disk is compressed between the head of the body of the punch and the lower surface of the plug of the insert of the die.

5. The method of any one of the preceding claims, wherein said step for drilling the flat head (74) of the projecting part of the disk is performed by means of a sharp-edged blade (350) connected to the upper base (B2) and passing through the die (M) to enter an axial hole (225) of a sleeve (224) of the punch.

6. The method of any one of the preceding claims, also comprising a step for flattening a connecting portion (92a) between a first shank (92) and a second shank (93) of the central projecting part of the disk, by means of a punch (P) having a cylindrical body (220) with a head (221) disposed in a sleeve (224) having an upper flat edge (226) in such a way that the head projects from the upper edge of the sleeve and a die (M) having a cylindrical insert (331) with an axial channel (332) facing the head of the punch, so that the connecting portion (92a) between the first shank (92) and the second shank (93) of the central projecting part of the disk is compressed between the upper edge (226) of the sleeve of the punch and the lower edge of the insert (332) of the die.

7. The method of any one of the preceding claims, wherein said step for bending the peripheral edges of the disk is performed by means of a punch (P) having a plate (222) with a peripheral cylindrical part (227) that projects from the plate in upper position.

8. The method of any one of the preceding claims, performed by means of a transfer press comprising a plurality of stations (S1-S11) provided with cutting and/or drawing molds.

## Patentansprüche

1. Verfahren zur Herstellung eines Schwungrades, umfassend folgende Schritte:
- Schneiden einer Scheibe (1) ausgehend von einem Metallblech (W),
- Tiefziehen eines zentralen Vorsprungsteils der Scheibe mittels wenigstens eines Stempels mit einem kugelförmigen Kopf (221), um ein zentrales Vorsprungsteil (60) der Scheibe mit einem kugelförmigen Kopf (64) zu erhalten, das aus einem flachen Teil (61) der Scheibe hervorsteht,
- Abflachen des kugelförmigen Kopfes (64) des zentralen Vorsprungsteils der Scheibe, um einen flachen Kopf (74) zu erhalten,
- Bohren des flachen Kopfes (74) des zentralen Vorsprungsteils der Scheibe, um ein axiales Durchgangsloch (85) mit einem aus dem Rand des flachen Kopfes (84) rund um das axiale Durchgangsloch (85) gebildeten Bund zu erhalten;
- Biegen der Ränder des flachen Kopfes rund um das Durchgangsloch (85) und Extrudieren eines zylindrischen Schaftes (93), um ein Loch (97) mit einem konstanten Durchmesser zu erhalten und Biegen der peripheren Ränder der Scheibe, um einen abgewinkelten, peripheren Rand (94) zu erhalten, und
- Schneiden von Schlitzen (118, 119) in einem flachen Abschnitt (91) der Scheibe zwischen dem zentralen Vorsprungsabschnitt und dem abgewinkelten, peripheren Rand (94);
wobei
der Schritt des Biegens der Ränder des flachen Kopfes (84) der Scheibe mittels eines Stempels (P) erfolgt, der einen zylindrischen Körper mit einem Kopf (221) in Form einer Kugelkalotte und eine Matrize mit einem zylindrischen Einsatz (331) mit einem zum Kopf des Stempels gerichteten, axialen Kanal (332) aufweist,
wobei der Kopf (221) in Form einer Kugelkalotte in den axialen Kanal (332) des zylindrischen Einsatzes (331) der Matrize eintritt, woraufhin der zylindrische Schaft (93) extrudiert wird, d. h. die Ränder des flachen Kopfes (84) rund um das Loch (85) derart abgewinkelt werden, dass ein Loch mit konstantem Durchmesser erhalten wird.

2. Verfahren nach Anspruch 1, umfassend:
- ein erstes Tiefziehen eines zentralen Vorsprungsteils (20) der Scheibe mittels eines ersten Stempels (P) mit einem zylindrischen Körper (220) und einem Kopf (221) in Form einer Kugelkalotte und einer ersten Matrize (M) mit einem zu dem Kopf des ersten Stempels gerichteten Sitz (320),
- anschließendes, mehrfaches Tiefziehen eines zentralen Vorsprungsteils (30, 40, 50) der Scheibe mittels Stempeln (P) mit einem zylindrischen Körper und einem Kopf in Form einer Kugelkalotte und Matrizen (M) mit zu den Köpfen der Stempel gerichteten Sitzen, wobei die Durchmesser der Köpfe der Stempel, angefangen vom Durchmesser des Kopfes (221) des ersten Stempels zunehmend kleiner sind.

3. Verfahren nach Anspruch 1 oder 2, umfassend ein Tiefziehen eines zentralen Vorsprungsteils (60) der Scheibe mittels eines Stempels (P) mit einem zylindrischen Körper und einem kugelförmigen Kopf und einer Matrize (M) mit einem zylindrischen Einsatz (321) mit einem zum Kopf des Stempels gerichteten axialen Kanal (322) und einem unteren Rand mit einer dem axialen Kanal zugewandten, ringförmigen Nut (323), derart, dass das zentrale Vorsprungsteil (60) der Scheibe einen ersten Schaft (62) aufweist, der durch die ringförmige Nut des Einsatzes der Matrize gebildet wird, und einen zweiten Schaft (63), der durch den Kopf des Stempels gebildet wird, wobei der zweite Schaft (63) axial aus dem ersten Schaft auskragt und einen kleineren Durchmesser als der erste Schaft und einen Kopf (64) in Form einer Kugelkalotte aufweist.

4. Verfahren nach einem der vorstehenden Ansprüche, wobei der Schritt des Abflachens des Kopfes (64) des zentralen Vorsprungsteils (60) der Scheibe mittels eines Stempels (P) mit einem zylindrischen Körper (220) mit einem flachen Kopf (231) und einer Matrize (M) ausgeführt wird, die einen zylindrischen Einsatz (321) mit einem zum Kopf des Stempels gerichteten axialen Kanal (322) und einen Deckel (325) mit einer unteren, flachen Fläche aufweist, die in dem axialen Kanal des zylindrischen Einsatzes der Matrize angeordnet ist, derart, dass der Kopf des zentralen Vorsprungsteils der Scheibe zwischen dem Kopf des Stempelkörpers und der unteren Fläche des Stopfens des Matrizeneinsatzes zusammengedrückt wird.

5. Verfahren nach einem der vorstehenden Ansprüche, wobei der Schritt des Bohrens des flachen Kopfes (74) des Vorsprungsteils der Scheibe mittels einer scharfen Klinge (350) erfolgt, die mit der unteren Basis (B2) verbunden ist und durch die Matrize (M) hindurchgeht, um in ein axiales Loch (225) einer Hülse (224) des Stempels einzutreten.

6. Verfahren nach einem der vorstehenden Ansprüche, umfassend ferner einen Schritt des Abflachens eines Verbindungsabschnitts (92a) zwischen einem ersten Schaft (92) und einem zweiten Schaft (93) des zentralen Vorsprungsteils der Scheibe mittels eines Stempels (P) mit einem zylindrischen Körper (220) mit einem Kopf (221), der in einer Hülse (224) mit einem oberen flachen Rand (226) angeordnet ist, derart, dass der Kopf aus dem oberen Rand der Hülse hervorsteht, und einer Matrize (M) mit einem zylindrischen Einsatz (331) mit einem zum Kopf des Stempels gerichteten, axialen Kanal (332), derart, dass der Verbindungsabschnitt (92a) zwischen dem ersten Schaft (92) und dem zweiten Schaft (93) des zentralen Vorsprungsteils der Scheibe zwischen dem oberen Rand (226) der Hülse des Stempels und dem unteren Rand des Einsatzes (332) der Matrize zusammengedrückt wird.

7. Verfahren nach einem der vorstehenden Ansprüche, wobei der Schritt des Biegens der peripheren Ränder der Scheibe mittels eines Stempels (P) mit einer Platte (222) mit einem zylindrischen, peripheren Teil (227) erfolgt, das oben aus der Platte hervorsteht.

8. Verfahren nach einem der vorstehenden Ansprüche, das mittels einer Transferpresse ausgeführt wird, die eine Mehrzahl von Stationen (S1-S11) umfasst, die mit Schneid- und/oder Tiefziehformen versehen sind.

## Revendications

1. Méthode de production d'un volant comprenant les étapes suivantes :
- tranchage d'un disque (1) à partir d'une tôle métallique (W),
- emboutissage d'une partie centrale qui fait saillie du disque moyennant au moins un poinçon à tête sphérique (221), de manière à obtenir une partie centrale qui fait saillie (60) du disque avec une tête sphérique (64) qui fait saillie depuis une partie plate (61) du disque,
- aplatissement de la tête sphérique (64) de la partie centrale qui fait saillie du disque, de manière à obtenir une tête plate (74),
- perçage de la tête plate (74) de la partie centrale qui fait saillie du disque de manière à obtenir un orifice axial passant (85), avec un collier formé moyennant le bord de la tête plate (84) autour de l'orifice axial passant (85) ;
- pliage des bords de la tête plate autour de l'orifice passant (85) et extrusion d'une tige cylindrique (93) de manière à obtenir un orifice (97) de diamètre constant et pliage des bords périphériques du disque afin d'obtenir un bord périphérique replié (94), et
- tranchage de fentes (118, 119) dans un segment plat (91) du disque entre le segment central en saillie et le bord périphérique replié (94);
où
ladite étape de pliage des bords de la tête plate (84) du disque s'effectue moyennant un poinçon (P) ayant un corps cylindrique avec une tête (221) en forme de calotte sphérique et une matrice ayant un tasseau cylindrique (331) avec un canal axial (332) orienté vers la tête du poinçon,
où la tête (221) en forme de calotte sphérique entre dans le canal axial (332) de l'insert cylindrique (331) de la matrice, ce qui cause en conséquence l'extrusion de la tige cylindrique (93), c'est-à-dire les bords de la tête plate (84) autour de l'orifice (85) sont repliés de manière à obtenir un orifice ayant un diamètre constant.

2. Méthode selon la revendication 1, comprenant :
- un premier emboutissage d'une partie centrale qui fait saillie (20) du disque moyennant un premier poinçon (P) ayant un corps cylindrique (220) et une tête (221) en forme de calotte sphérique et une première matrice (M) ayant un emplacement (320) orienté vers la tête du premier poinçon,
- emboutissages ultérieurs d'une partie centrale qui fait saillie (30, 40, 50) du disque moyennant des poinçons (P) ayant un corps cylindrique et une tête en forme de calotte sphérique et des matrices (M) ayant des emplacements orientés vers les têtes des poinçons, où les diamètres des têtes des poinçons sont progressivement inférieurs à partir du diamètre de la tête (221) du premier poinçon.

3. Méthode selon la revendication 1 ou 2, comprenant un emboutissage d'une partie centrale qui fait saillie (60) du disque moyennant un poinçon (P) ayant un corps cylindrique et une tête sphérique et une matrice (M) ayant un tasseau cylindrique (321) avec un canal axial (322) orienté vers la tête du poinçon et un bord inférieur avec une rainure annulaire (323) orienté vers le canal axial, de manière à ce que ladite partie centrale qui fait saillie (60) du disque ait une première tige (62) générée par la rainure annulaire du tasseau de la matrice et une seconde tige (63) générée par la tête du poinçon, où la seconde tige (63) fait saillie axialement depuis la première tige et a un diamètre inférieur à la première tige et une tête (64) en forme de calotte sphérique.

4. Méthode selon l'une quelconque des revendications précédentes, où ladite étape d'aplatissement de la tête (64) de la partie centrale qui fait saillie (60) du disque, est réalisée moyennant un poinçon (P) ayant un corps cylindrique (220) avec une tête plate (231) et une matrice (M) ayant un tasseau cylindrique (321) avec un canal axial (322) orienté vers la tête du poinçon et un couvercle (325) avec la surface inférieure plate disposée dans le canal axial du tasseau cylindrique de la matrice, de manière que la tête du segment central qui fait saillie du disque soit comprimée entre la tête du corps du poinçon et la surface inférieure du bouchon du tasseau de la matrice.

5. Méthode selon l'une quelconque des revendications précédentes, où ladite étape de perçage de la tête plate (74) de la partie qui fait saillie du disque est réalisée à l'aide d'une lame tranchante (350) reliée à la base supérieure (B2) et qui traverse la matrice (M) pour entrer dans un orifice axial (225) d'un manchon (224) du poinçon.

6. Méthode selon l'une quelconque des revendications précédentes, comprenant également une étape d'aplatissement d'un segment de raccord (92a) entre une première tige (92) et une seconde tige (93) de la partie centrale qui fait saillie du disque, moyennant un poinçon (P) ayant un corps cylindrique (220) avec une tête (221) disposée dans un manchon (224) ayant un bord supérieur plat (226) de manière à ce que la tête fasse saillie du bord supérieur du manchon et une matrice (M) ayant un tasseau cylindrique (331) avec un canal axial (332) orienté vers la tête du poinçon, de manière à ce que le segment de raccord (92a) entre la première tige (92) et la seconde tige (93) de la partie centrale qui fait saillie du disque soit comprimé entre le bord supérieur (226) du manchon et le bord inférieur du tasseau (332) de la matrice.

7. Méthode selon l'une quelconque des revendications précédentes, où ladite étape de pliage des bords périphériques du disque est réalisée moyennant un poinçon (P) ayant une plaque (222) avec une partie cylindrique périphérique (227) qui fait saillie supérieurement de la plaque.

8. Méthode selon l'une quelconque des revendications précédentes, réalisée moyennant une presse de transfert comprenant une pluralité de postes (S1-S11) comprenant des moules de tranchage et/ou d'emboutissage.
